## Europäisches Patentamt
## European Patent Office
## Office européen des brevets

(19)

(11) Numéro de publication: **0 032 345**
**B1**

(12)

# FASCICULE DE BREVET EUROPEEN

(45) Date de publication du fascicule du brevet: **29.06.83**

(51) Int. Cl.³: **B 62 D 5/08, F 16 F 1/14**

(21) Numéro de dépôt: **80401876.0 .**

(22) Date de dépôt: **29.12.80**

(54) **Dispositif de direction assistée hydraulique pour véhicule automobile.**

(30) Priorité: **04.01.80 FR 8000117**

(43) Date de publication de la demande:
**22.07.81 Bulletin 81/29**

(45) Mention de la délivrance du brevet:
**29.06.83 Bulletin 83/26**

(84) Etats contractants désignés:
**DE GB IT**

(56) Documents cités:
**FR - A - 1 223 845**
**FR - A - 2 178 379**
**FR - A - 2 380 175**
**US - A - 4 151 728**

(73) Titulaire: **SOCIETE ANONYME D.B.A.**
**Centre Paris Pleyel**
**F-93521 St-Denis Cédex 01 (FR)**

(72) Inventeur: **Tobiasz, André**
**8/10 Quai de Stalingrad**
**F-92100 Boulogne Billancourt (FR)**

(74) Mandataire: **Le Moenner, Gabriel et al,**
**SERVICE BREVETS BENDIX 44, Rue François 1er**
**F-75008 Paris (FR)**

Courier Press, Leamington Spa, England.

## Dispositif de direction assistee hydraulique pour vehicule automobile

La présente invention concerne un dispositif de direction assistée hydraulique pour véhicule automobile du type à distributeur rotatif comprenant une chemise de distribution prolongeant un organe de commande de direction, un rotor de forme générale tubulaire disposé à l'intérieur d'un alésage de la chemise, une barre de torsion logée à l'intérieur du rotor et ayant une extrémité fixée par goupille au rotor et l'autre extrémité fixée par goupille à l'organe de commande de direction, et un circuit hydraulique pour générer une grandeur de commande en réponse à un déplacement angulaire imposé au rotor.

Un dispositif de ce type est décrit par exemple dans le brevet français 2 178 379. Dans le dispositif connu, la barre de torsion, d'une longueur minima imposée, qui réalise la liaison élastique entre le rotor et l'organe de commande de direction est constituée d'un acier élastique et présente une première partie d'extrémité fixée au rotor, de diamètre égal au diamètre inférieur du rotor, une partie centrale de plus faible diamètre et une seconde partie d'extrémité fixée à l'organe de commande de direction et reçue dans un alésage formé dans cet organe, cette seconde partie ayant sensiblement le même diamètre que la première. Le raccordement de la partie centrale aux parties d'extrémité se fait de façon progressive suivant des rayons réalisés lors de l'usinage de la barre. Dans ces zones de raccordement de section variable se produisent des concentrations de contraintes désavantageuses qui augmentent la fatigue de la barre de torsion.

Le brevet français 1 223 845 montre par ailleurs un servo-mécanisme de direction de conception différente, avec deux faces axiales coopérant pour former le circuit hydraulique, les deux organes mutuellement rotatifs étant couplés par une barre de torsion de section constante enfilée au travers de douilles coniques la solidarisant aux deux organes. Cet agencement—non décrit—ne permet pas de réduire la longueur de la partie utile de la barre ni d'offrir un ensemble de barre de torsion unitaire, préassemblé, susceptible d'être aisément mis en place au poste de montage.

L'invention vise à remédier aux inconvénients de la technique évoquée en premier et, à cet effet, dans le dispositif de direction assistée selon l'invention, la barre de torsion comprend une partie centrale de section constante en acier à haute résistance et deux embouts en acier ordinaire, les extrémités de la partie active étant respectivement engagées dans des alésages borgnes des embouts et fixées à ceux-ci, les embouts étant respectivement rendus solidaires du rotor et de l'organe de commande de direction par lesdites goupilles.

L'invention permet de supprimer les concentrations de contrainte puisque la partie centrale a une section constante et que les embouts sont en une matière beaucoup plus malléable que celle de la partie active.

L'usinage est nettement simplifié, puisque la partie centrale, ayant une section constante, peut être obtenue par étirage.

De plus, comme seule la partie centrale est en matière à haute résistance, on peut utiliser un acier de résistance plus élevée que dans l'art antérieur où la barre de torsion est monobloc et où, par conséquent, les parties d'extrémité aussi sont en acier à haute résistance. Cela permet de réduire encore la longueur de la barre de torsion et donc l'encombrement du dispositif, ce qui est important pour des organes de véhicule.

La fixation des embouts à la partie active a lieu de façon avantageuse par emmanchement à force ou par sertissage des embouts, ceux-ci étant munis à cet effet d'alésage borgnes de diamètre adapté au type d'opération envisagé.

L'invention sera bien comprise à la lecture de la description ci-après, faite en référence aux dessins annexés, dans lesquels:

— la figure 1 est une coupe axiale d'un distributeur pour direction assistée selon l'invention;
— les figures 2a et 2b illustrent par des coupes partielles un mode d'assemblage de la barre de torsion;
— les figures 3a et 3b illustrent un autre mode d'assemblage de la barre de torsion.

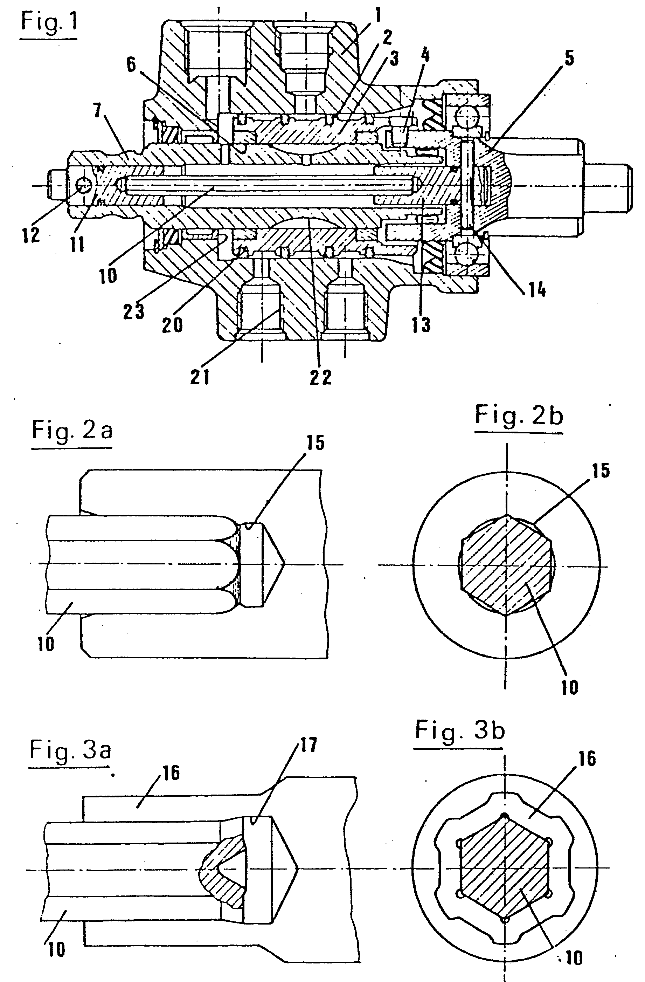

Le distributeur pour dispositif de direction assistée hydraulique représenté à la figure 1 comprend un corps 1 muni d'un alésage 2. Dans cet alésage est montée une chemise de distribution 3 rendue solidaire par une broche 4 d'un organe de commande de direction 5, constitué dans le présent exemple par le pignon d'une direction à pignon et crémaillère.

Dans l'alésage 6 de la chemise de distribution 3 est monté un rotor tubulaire 7, ce rotor étant la pièce sur laquelle s'exercent les couples de braquage imposés par le conducteur.

Le rotor 7 est relié de façon élastique au pignon 5 par une barre de torsion constituée selon l'invention d'une partie centrale 10, d'un embout 11 fixé au rotor par une goupille 12 et d'un second embout 13 fixé au pignon 5 par une goupille 14, les deux embouts étant liés rigidement à la partie centrale 10.

La partie centrale 10 seule est en acier de haute qualité, par exemple en acier à ressort du type 50 CV4 ayant une résistance $R_N=150$ kg/mm². Les embouts sont au contraire en acier ordinaire, par exemple du type XC 35, avec une résistance $R_N=45$ kg/mm².

La partie centrale 10 a une section constante, de façon avantageuse une section prismatique et en particulier hexagonale comme dans l'exemple représenté.

L'assemblage des embouts à la partie centrale doit assurer une liaison rigide. Les Figures 2a et 2b illustrent un assemblage par emmanchement à force de l'extrémité de la partie centrale dans un alésage borgne 15 formé dans l'embout, ledit alésage a un diamètre inférieur au cercle circonscrit de la section de la partie 10.

Les figures 3a et 3b illustrent un autre mode d'assemblage, dans lequel la partie 16 de l'embout 11 ou 13 dans laquelle pénètre l'extrémité de la partie centrale 10 est sertie radialement sur cette extrémité. Dans ce cas, l'alésage borgne 17 formé dans chaque embout présente un diamètre tel qu'il puisse recevoir avec jeu l'extrémité de la partie centrale 10.

Pour le reste, le dispositif représenté est classique, notamment en ce qui concerne les éléments hydrauliques. On indiquera seulement que l'espace entre la chemise de distribution 3 et le corps 1 est cloisonné de façon étanche par des joints tels que 20, que les chambres ainsi définies sont reliées respectivement par des orifices tels que 21 à une source de pression et à une vidange et aux deux compartiments d'un vérin d'assistance (non représenté) et qu'il est prévu des conduits tels que 22, 23, l'agencement étant tel que lorsque le rotor 7 tourne par suite du braquage, la rotation relative entre le rotor et la chemise entraîne un déséquilibre entre les pressions du vérin d'assistance qui est fonction de l'angle de braquage. Tout ceci est connu et des explications détaillées seraient superflues.

En outre, le partie centrale 10 au moins peut avantageusement être soumise à une traitement de "grenaillage contrôlé" pour éliminer toutes les petites irrégularités et cavités qui se trouvent à la surface du barreau, brut d'extrusion, formant ladite partie centrale lesquelles constituent des amorces de rupture.

## Revendications

1. Dispositif de direction assistée hydraulique pour véhicule automobile, du type à distributeur rotatif comprenant une chemise de distribution (3) prolongeant un organe de commande de direction (5), un rotor (7) de forme générale tubulaire disposé à l'intérieur d'un alésage (6) de la chemise, une barre de torsion logée à l'intérieur du rotor et ayant une extrémité reliée par une goupille (12) au rotor (7) et l'autre extrémité reliée par une goupille (14) à l'organe de commande de direction (5), et un circuit hydraulique pour générer une grandeur de commande en réponse à un déplacement angulaire imposé au rotor, caractérisé par le fait que la barre de torsion comprend une partie centrale (10) de section constante en acier à haute résistance et deux embouts (11, 13) en acier ordinaire, les extrémités de la partie étant respectivement engagées centrale dans des alésages borgnes (15, 17) des embouts et fixées dans ceux-ci, les embouts étant respectivement rendus solidaires du rotor et de l'organe de commande de direction par lesdites goupilles (12, 14).

2. Dispositif selon la revendication 1, caractérisé par le fait que la partie centrale (10) a une section prismatique.

3. Dispositif selon la revendication 2, caractérisé en ce que ladite partie centrale (10) Fa une section hexagonale.

4. Dispositif selon l'une des revendications 1 à 3, caractérisé par le fait que les embouts (11, 13) sont emmanchés à force sur les extrémités respectives de la partie centrale (10) (Fig. 2).

5. Dispositif selon l'une des revendications 1 à 3, caractérisé par le fait que la partie du chaque embout (11, 13) dans laquelle est engagée l'extrémité respective de la partie centrale (10) est sertie radialement sur ladite extrémité (Fig. 3).

6. Dispositif selon l'une des revendications précédentes, caractérisé en ce que ladite partie centrale (10) a subi un traitement de grenaillage contrôlé.

## Patentansprüche

1. Hydraulische Servolenkungs-Vorrichtung für ein Kraftfahrzeug, die eine Drehventil aufweist, mit einer Ventilhülse (3), die eine Verlängerung eines Lenksteuerorganes (5) darstellt, einem allgemein rohrförmigen Drehkörper (7), der innerhalb einer Bohrung (6) der Ventilhülse angeordnet ist, einem Torsionsstab, der im Inneren des Drehkörpers angeordnet ist und dessen eines Ende durch einen Stift (12) mit dem Drehkörper (7) und dessen anderes Ende durch einen Stift (14) mit dem Lenksteuerorgan (5) verbunden ist, und einem Hydraulikkreis zur Erzeugung einer Steuergröße in Abhängigkeit von einer Winkelverstellung des Drehkörpers, dadurch gekennzeichnet, daß der Torsionsstab einen zentralen Abschnitt (10) konstanten Querschnitts aus hochfestem Stahl und zwei Endteile (11, 13) aus gewöhnlichem Stahl aufweist, wobei die Enden des zentralen Abschnitts jeweils in Sackbohrungen (15, 17) der Endteile sitzen und in diesen befestigt sind, wobei die Endteile mit dem Drehkörper bzw. dem Lenksteuerorgan durch die besagten Stifte (12, 14) fest verbunden sind.

2. Vorrichtung nach Anspruch 1, dadurch gekennzeichnet, daß der zentrale Abschnitt (10) einen prismatischen Querschnitt hat.

3. Vorrichtung nach Anspruch 2, dadurch gekennzeichnet, daß der zentrale Abschnitt (10) einen hexagonalen Querschnitt hat.

4. Vorrichtung nach einem der Ansprüche 1 bis 3, dadurch gekennzeichnet, daß die Endteile (11, 13) mit Preßpassung auf den entsprechenden Enden des zentralen Abschnitts (10) sitzen (Fig. 2).

5. Vorrichtung nach einem der Ansprüche 1 bis 3, dadurch gekennzeichnet, daß der Abschnitt jedes Endteiles (11, 13), in den das entsprechende Ende des zentralen Abschnittes greift, mittels einer radialen Verengung auf dem entsprechenden Ende sitzt (Fig. 3).

6. Vorrichtung nach einem der vorhergehenden Ansprüche, dadurch gekennzeichnet, daß der zentrale Abschnitt (10) einer kontrollierten Oberflächenstrahlbehandlung ausgesetzt worden ist.

## Claims

1. An hydraulic servo-steering device for an automotive vehicle, including a rotary valve comprising a valve sleeve (3) forming an extension of a steering control member (5), a rotor (7) of generally tubular shape disposed within a bore (6) of the sleeve, a torsion rod arranged within the rotor and having one extremity connected by a pin (12) to the rotor (7) and the other extremity connected by a pin (14) to the steering control member (5), and an hydraulic circuit for generating a control value in response to an angular displacement imparted to the rotor, characterized in that the torsion rod comprises a central part (10) of constant cross-section of a high resistant steel and a pair of end parts (11, 13) of ordinary steel, the ends of the central part being, respectively, engaged in blind bores (15, 17) of the end parts and fixed therein, the end parts being fixedly connected, respectively to the rotor and the steering control member by said pins (12, 14).

2. Device according to claim 1, characterized in that the central part (10) has a prismatic section.

3. Device according to claim 2, characterized in that said central part (10) has an hexagonal section.

4. Device according to any of claims 1 to 3, characterized in that the end parts (11, 13) are press-fitted upon the respective ends of the central part (10) (Fig. 2).

5. Device according to any of the claims 1 to 3, characterized in that the portion of each end part (11, 13) in which the respective end of the central part (11) is engaged is radially crimped upon said end (Fig. 3).

6. Device according to any of the claims 1 to 5, characterized in that said central part (10) is subjected to a controlled abrasive blasting treatment.

Fig. 1

Fig. 2a

Fig. 2b

Fig. 3a

Fig. 3b